# EUROPEAN PATENT APPLICATION

(11) **EP 4 811 641 A1**
(43) Date of publication of application: **23.09.2026**
(21) Application number: 25165208.7
(22) Date of filing: 21.03.2025
(51) Int. Cl.: H02M 7/217, C25B 1/04, H02M 7/23, H02M 7/08

(54) **ELECTROLYSIS SYSTEM, A METHOD FOR OPERATING AN ELECTROLYSIS SYSTEM, A COMPUTER PROGRAM, A COMPUTER-READABLE STORAGE MEDIUM, A COMPUTER AND/OR A CONTROLLER, A CONVERTER SYSTEM AND AN ELECTROLYZER POWER SUPPLY SYSTEM**

(71) Applicant: Siemens Energy Global GmbH & Co. KG, 81739 München (DE)
(72) Inventor: Craciun, Bogdan, 91052 Erlangen (DE); Schumann, Sven, 91452 Wilhermsdorf (DE); Herzig, Fabian, 64295 Darmstadt (DE)

(57) **Abstract**

The invention relates to an electrolysis system (1) and a corresponding method. The electrolysis system (1) comprises an electrolyzer (2) and a converter system (3) comprising a plurality of converters (4). The electrolyzer (2) is adapted to produce an energy carrier by means of the direct current electrical power input (6) from the converter system (3) at an electrolyzer operating power which is less than or equal to a maximum converter system power capacity of the converter system (3). The respective converter (4) of the converter system (3) has a converter power capacity which partially corresponds to the maximum power capacity of the converter system (3). For improving the service life of the converter system (3), the converter system (3) is adapted to operate by means of a subset of the plurality of converters (4) if the electrolyzer operating power is less than the maximum converter system power capacity.

## Description

### Technical Field

The present invention relates to an electrolysis system, a method for operating an electrolysis system, a computer program, a computer-readable storage medium, a computer and/or a controller, a converter system and an electrolyzer power supply system.

### Technological Background

As electrolyzers age, the input voltage and power requirements increase over time. Accordingly, the power supply must match the maximum power required in the advanced stages of electrolyzer aging towards the end of its life.

### Summary of the invention

It is thus an object of the present invention to provide an improved electrolysis system and an improved method of operating an electrolysis system, which particularly improve the service life a converter system.

A solution is provided by the subject matter according to the independent claims. Advantageous additional embodiments of the invention are described by the dependent claims, the following description and the figures.

The invention relates to an electrolysis system comprising an electrolyzer and a converter system which comprises a plurality of converters and is adapted to convert an alternating current electrical power input into a direct current electrical power input for the electrolyzer, wherein the electrolyzer is adapted to produce an energy carrier by means of the direct current electrical power input from the converter system at an electrolyzer operating power which is less than or equal to a maximum converter system power capacity of the converter system, wherein the respective converter of the converter system has a converter power capacity which partially corresponds to the maximum power capacity of the converter system.

According to the invention, the converter system is adapted to operate by means of a subset of the plurality of converters if the electrolyzer operating power is less than the maximum converter system power capacity.

In other words, the converter system may be adapted to deactivate or disconnect at least one converter from the plurality of converters if the electrolyzer operating power is less than the maximum converter system power capacity and/or below an electrolyzer operating power limit which requires an operation of all converters of the converter system. The number of converters of the subset may be less than the number of converters of the converter system. In particular, the converter system may be adapted to operate by means of the subset of the plurality of converters if the electrolyzer operating power is below the maximum converter system power capacity and/or the electrolyzer operating power limit. The electrolyzer operating power may be below the maximum converter system power capacity.

Thus, the converter system may be adapted to operate by means of all converters if the electrolyzer operating power is above the electrolyzer operating power limit and to disable at least one converter of the converter system from operation, particularly if the electrolyzer operating power is below the electrolyzer operating power limit. The electrolyzer operating power limit may be less than or equal to the maximum converter system power capacity.

The converter system, particularly the respective converter of the converter system, may be adapted to convert an alternating current into a direct current for the electrolyzer. The converter system may comprise a controller, particularly a converter controller.

Additionally or alternatively, the converter system, particularly the respective converter of the converter system, may be adapted to convert a direct current from an electrical energy source into the direct current for the electrolyzer. Thus, the alternating current electrical power input may instead be a direct current electrical power input from the electrical power source.

The electrolyzer may be adapted to produce an energy carrier such as hydrogen by means of the direct current electrical power input provided by the converter system. The electrolysis system may comprise an electrolyzer power supply system and the electrolyzer, wherein the electrolyzer power supply system may comprise the converter system and optionally a transformer.

This provides the advantage that the operating hours of the converters of the converter system can be reduced which allows an increase of the service life of the converter system.

The electrolysis system also includes embodiments by which additional advantages are obtained.

In one embodiment, the converter system is adapted to adjust a number of converters of the subset corresponding to the electrolyzer operating power and/or an aging parameter of the electrolyzer. In other words, the converter system may be adapted to increase or decrease the number of converters of the subset of the plurality of converters corresponding to the electrolyzer operating power and/or the aging parameter of the electrolyzer. The converter system may be adapted to determine the electrolyzer operating power and/or the aging parameter based on a measurement of an operating current and/or voltage of the electrolyzer. The converter system may be adapted to determine the aging parameter based on a dataset of a current-voltage characteristic of the electrolyzer. The converter system may be adapted to decrease the number of disconnected converters of the plurality of converters corresponding to an increase of the electrolyzer operating power and/or an increase of the aging of the electrolyzer based on the aging parameter. This provides the advantage that the operating hours of the converters of the converter system can be further reduced.

In one embodiment, the converter system is adapted to change a selection of the converters from the plurality of converters for the subset. In other words, the converter system may be adapted to alternate a selection of the converters from the plurality of converters for the subset. The converter system may be adapted to disable an operation of at least one converter in a cyclic mode if the electrolyzer operating power is below an electrolyzer operating power limit where all converters of the converter system must be in operation. For example, the converter system may be adapted to alternate disconnecting a first converter and connecting second converter of the plurality of converters to replace the first converter, particularly in the cyclic mode. This provides the advantage that the operating hours can be evenly reduced for all converters of the converter system.

In one embodiment, the subset comprises all converters of the plurality of converters if the electrolyzer operating power, particularly in an end-of-life state of the electrolyzer, is between an electrolyzer operating power limit where all converters of the converter system must be operated and the maximum converter system power capacity. In other words, the converter system may be adapted to operate all converters, particularly selecting a number of converters for the subset which corresponds to the total number of converters of the converter system, if the electrolyzer operating power is above the electrolyzer operating power limit where all converters of the converter system must be operated or is equal to the maximum converter system power capacity. The electrolyzer operating power limit may be below the maximum converter system power limit. Thus, the subset of converters may correspond to the plurality of converters. This provides the advantage that all converters of the converter system are only operated when the electrolyzer requires the operation of all converters of the converter system. This allows an improved service life of the converter.

In one embodiment, the converter power capacity of the respective converter corresponds to an operating power difference between the electrolyzer operating power in the end-of-life state of the electrolyzer and the electrolyzer operating power in a begin-of-life state of the electrolyzer. In other words, the converter power capacity of the respective converter may be dimensioned in accordance with a delta of the electrolyzer operating power between the end-of-life state and the begin-of-life state of the electrolyzer. This provides the advantage that an optimum ratio of service life and installation costs of the converter system can be achieved.

The invention further relates to a method of operating an electrolysis system comprising an electrolyzer and a converter system which comprises a plurality of converters and which converts an alternating current electrical power input into a direct current electrical power input for the electrolyzer, wherein the electrolyzer produces an energy carrier by means of the direct current electrical power input from the converter system at an electrolyzer operating power which is less than or equal to a maximum converter system power capacity of the converter system, wherein the respective converter of the converter system has a converter power capacity which partially corresponds to the maximum power capacity of the converter system, comprising the step of:
- Operating the converter system by means of a subset of the plurality of converters if the electrolyzer operating power is less than the maximum converter system power capacity.

In other words, the converter system may deactivate or disconnect at least one converter of the plurality of converters if the electrolyzer operating power is less than the maximum converter system power capacity and/or below an electrolyzer operating power limit which requires an operation of all converters of the converter system. The converter system may operate a number of converters of the subset which may be less than the number of all converters of the converter system. In particular, the converter system may operate by means of the subset of the plurality of converters if the electrolyzer operating power is below the maximum converter system power capacity and/or the electrolyzer operating power limit.

Thus, the converter system may operate by means of all converters if the electrolyzer operating power is above the electrolyzer operating power limit and may disable at least one converter of the converter system from operation, particularly if the electrolyzer operating power is below the electrolyzer operating power limit. The electrolyzer operating power limit may be less than or equal to the maximum converter system power capacity.

This provides the advantage that the operating hours of the converters of the converter system can be reduced which allows an increase of the service life of the converter system.

The method also includes embodiments by which additional advantages are obtained.

In one embodiment, the method further comprises the step of:
- Adjusting a number of converters of the subset corresponding to the electrolyzer operating power and/or an aging parameter of the electrolyzer.

In other words, the converter system may increase or decrease the number of converters of the subset of the plurality of converters corresponding to the electrolyzer operating power and/or the aging parameter of the electrolyzer. The electrolyzer operating power and/or the aging parameter may be determined based on a measurement of an operating current and/or voltage of the electrolyzer. The aging parameter may be determined based on a dataset of a current-voltage characteristic of the electrolyzer. The converter system may decrease the number of disconnected converters corresponding to an increase of the electrolyzer operating power and/or an increase of the aging of the electrolyzer based on the aging parameter. This provides the advantage that the operating hours of the converters of the converter system can be further reduced.

In one embodiment, the method further comprises the step of:
- Adjusting a number of converters of the subset corresponding to the electrolyzer operating power and/or an aging parameter of the electrolyzer.

In other words, the converter system may increase or decrease the number of converters of the subset of the plurality of converters corresponding to the electrolyzer operating power and/or the aging parameter of the electrolyzer. The aging parameter may be based on a dataset of a current-voltage characteristic of the electrolyzer. The converter system may decrease the number of disconnected converters corresponding to an increase of the electrolyzer operating power and/or an increase of the aging of the electrolyzer based on the dataset of the current-voltage characteristic. This provides the advantage that the operating hours of the converters of the converter system can be further reduced.

In one embodiment, the method further comprises the step of:
- Changing a selection of the converters from the plurality of converters for the subset.

In other words, the converter system may alternate a selection of the converters from the plurality of converters for the subset. The converter system may disable an operation of at least one converter in a cyclic mode if the electrolyzer operating power is below the electrolyzer operating power limit where all converters of the converter system must be in operation. For example, the converter system may alternate disconnecting a first converter and connecting second converter of the plurality of converters to replace the first converter, particularly in the cyclic mode. This provides the advantage that the operating hours can be evenly reduced for all converters of the converter system.

In one embodiment, the subset comprises all converters of the plurality of converters if the electrolyzer operating power, particularly in an end-of-life state of the electrolyzer, is between an electrolyzer operating power limit where all converters of the converter system must be operated and the maximum converter system power capacity. In other words, the converter system may operate all converters, particularly select a number of converters for the subset which corresponds to the total number of converters of the converter system, if the electrolyzer operating power is above the electrolyzer operating power limit where an operation of all converters is required or equal to the maximum converter system power limit. The electrolyzer operating power limit may be below the maximum converter system power limit. Thus, the subset of converters may correspond to the plurality of converters. Here, the electrolyzer operating power corresponding to the maximum converter system power capacity may refer to the electrolyzer power being between the electrolyzer operating power limit and the maximum converter system power capacity. This provides the advantage that all converters of the converter system are only operated when the electrolyzer requires the operation of all converters of the converter system. This allows an improved service life of the converter.

In one embodiment, the converter power capacity of the respective converter corresponds to an operating power difference between the electrolyzer operating power in the end-of-life state of the electrolyzer and the electrolyzer operating power in a begin-of-life state of the electrolyzer. In other words, the converter power capacity may be dimensioned in accordance with a delta of the electrolyzer operating power between the end-of-life state and the begin-of-life state of the electrolyzer. This provides the advantage that an optimum ratio of service life and installation costs of the converter system can be achieved.

The invention further relates to a computer program comprising instructions which, when the program is executed by a computer and/or a controller, particularly by a converter controller and/or an electrolyzer power supply system controller and/or an electrolyzer controller, cause the computer and/or the controller to carry out the steps of said method.

The invention also relates to a computer-readable storage medium having stored thereon said computer program. In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet.

The invention further relates to a computer and/or a controller, particularly a converter controller and/or an electrolyzer power supply system controller and/or an electrolyzer controller, comprising said computer-readable storage medium having stored thereon said computer program and optionally means to execute said method.

The computer may be a personal computer (PC). The controller may be programmable logic controller (PLC). The computer and/or the controller may comprise at least one processor and said computer-readable storage medium, wherein the computer-readable storage medium comprises said computer program which, when executed by the at least one processor, cause the computer and/or the controller to perform the method as described above. In other words, the at least one processor may be a microprocessor and/or a microcontroller and/or a FPGA (Field Programmable Gate Array) and/or a DSP (Digital Signal Processor).

The computer and/or the controller may comprise means for operating the respective converter of the converter system and/or means for activating or deactivating, particularly connecting or disconnecting, the respective converter. The computer and/or the controller may further comprise means for determining an electrolyzer operating power, particularly for measuring an operating current and/or voltage of the electrolyzer.

Additionally or alternatively, the computer and/or the controller may further comprise means for determining an aging parameter of the electrolyzer. Particularly, the computer and/or the controller may comprise means for storing a dataset of the current-voltage characteristic of the electrolyzer and means for measuring an operating current and/or voltage and/or operating hours of the electrolyzer.

The invention also relates to a converter system comprising said controller. The converter system may comprise a plurality of converters and said controller. The respective converter may be a self-commutated converter such as an IGBT converter and particularly be adapted to provide the direct current electrical power input for the electrolyzer.

The invention also relates to an electrolyzer power supply system comprising said controller and/or said converter system. The electrolyzer power supply system may comprise said converter controller and/or said electrolyzer power supply system controller.

Additionally or alternatively, the electrolyzer power supply system may comprise said converter system and optionally a transformer. The transformer may be a medium voltage (MV) to low voltage (LV) transformer and particularly be adapted to provide a low voltage electrical power input to the converter system.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic example of an electrolysis system and a schematic electrolyzer operating power relationship between a begin-of-life state and an end-of-life state of the electrolyzer; and
- Figure 2: shows a schematic flow chart of a method of operating the electrolysis system.

The following is a more detailed description of the invention with reference to the accompanying drawings. In the figures, similar elements are identified by identical reference numbers and repeated description may be omitted to avoid redundancy.

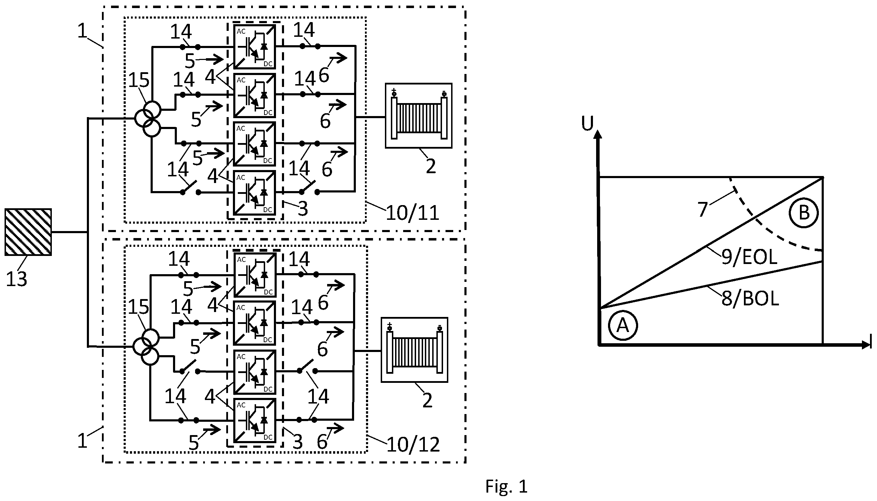

Figure 1 shows a schematic electrolysis system 1 on the left side.

The electrolysis system 1 comprises an electrolyzer 2 and an electrolyzer power supply system 10 comprising a transformer 15 and a converter system 3. The respective electrolysis system 1 is connected to an electrical grid 13 which provides an alternating current electrical power input 5 to the respective electrolyzer power supply system 10. The respective electrolyzer power supply system 10 is adapted to convert the alternating current electrical power input 5 from the electrical grid 13 into a direct current electrical power input 6 for the respective electrolyzer 2. The respective electrolyzer 2 is adapted to produce an energy carrier such as hydrogen by means of the direct current electrical power input 6. The converter system 3 of the respective electrolysis system 1 comprises a plurality of converters 4 wherein the respective converter 4 is adapted to partially convert the alternating current electrical power input 5 into the direct current electrical power input 6 for the electrolyzer 2. The respective converter 4 has a converter power capacity of converting the alternating current electrical power input 5 into the direct current electrical power input 6 which partially corresponds to the maximum power capacity of the converter system 3. The sum of the respective converter power capacity of all converters 4 of the converter system 3 corresponds to the maximum converter system power capacity.

The maximum converter system power capacity of the converter system 3 corresponds to an electrolyzer operating power in an end-of-life state EOL of the electrolyzer 2. The electrolyzer operating power between a begin-of-life state BOL and the end-of-life state EOL of the electrolyzer 2 is less than or equal to the maximum converter system power capacity. The electrolyzer operating power of the electrolyzer 2 corresponds to an absorption level of the direct current electrical power input 6 from the converter system 3 which particularly increases over the lifetime of the electrolyzer 2 as shown in the schematic current-voltage diagram on the right side of Figure 1.

The schematic current-voltage diagram shows an electrolyzer begin-of-life polarization curve 8 and an electrolyzer end-of-life polarization curve 9. In the end-of-life state EOL, the electrolyzer 2 requires more voltage U for the same current I compared to the begin-of-life state BOL. Therefore, the electrolyzer 2 requires more electrical power in the end-of-life state EOL for producing the same amount of energy carrier in the begin-of-life state BOL. Therefore, the converter system 3 has a maximum converter system power capacity for compensating the aging of the electrolyzer 2. Area A depicts the electrolyzer operating power for the begin-of life state BOL and end-of-life state EOL of the electrolyzer 2 where only a part or a subset of the plurality of converters 4 of the respective converter system 3 need to be operated. Area B depicts the electrolyzer operating power for the begin-of life state BOL and end-of-life state EOL where all converters 4 of the respective converter system 3 must be operated. Therefore, the respective electrolyzer 2 has an electrolyzer operating power limit 7 which separates area B from area A and where all converters 4 of the converter system 3 must be operated if the electrolyzer operating power is above the electrolyzr operating power limit 7.

Thus, the converter system 3 has a surplus converter system power capacity over most of the electrolyzer's 2 service life for compensating the aging in the end-of-life state EOL of the electrolyzer 2.

For improving the service life of the converter system 3, the converter system 3 is adapted to operate by means of a subset of the plurality of converters 4 if the electrolyzer operating power is less than the maximum converter system power capacity of the converter system 3 and/or below the electrolyzer operating power limit 7, particularly if the electrolyzer operating power is within area A in the current-voltage diagram on the right side of Figure 1. The number of converters 4 of the subset is less than the number of converters of the plurality of converters 4 of the converter system 3. For example, the converter system 3 is adapted to disconnect or deactivate at least one converter 4 of the plurality of converters 4 if the electrolyzer operating power is within area A and to connect or activate all converters 4 if the electrolyzer operating power corresponds to the maximum converter system power capacity, particularly if the electrolyzer operating power is above the electrolyzer operating power limit 7 where all converters 4 of the converter system 3 are required. Thus, all converters 4 of the converter system 3 are operated when the electrolyzer operating power is within area B of the current-voltage diagram on the right side of Figure 1.

Additionally, the converter system 3 is adapted to adjust a number of converters of the subset corresponding to the electrolyzer operating power and/or an aging parameter of the electrolyzer if the electrolyzer operating power is within area A, particularly below the electrolyzer operating power limit 7 and/or below the converter system maximum power capacity.

Additionally or alternatively, the converter system 3 is adapted to change a selection of the converters 4 from the plurality of converters 4 for the subset. Thus, the converter system 3 is adapted to alternate the selection of the converters 4 from the plurality of converters for the subset as shown in the upper group 10 and the lower group 11 where a different converter 4 is respectively disconnected in a row.

For example, the converter system 3 of the upper group 11 is adapted to disconnect the lowest converter 4 of the converter system 3 when the electrolyzer operating power is below maximum converter system power capacity and/or the electrolyzer operating power limit 7, whereas in the lower group 12, the second converter 4 from below is disconnected. After a pause time threshold has elapsed, the lowest converter 4 in the upper group 10 is connected and any other converter 4 of the converter system 3 of the upper group 10 may be disconnected in the cyclic mode. The same can be done for the lower group 12 in the cyclic mode, where the second converter 4 from below is currently disconnected. This changing or alternating the selection of the converters for the subset allows an even reduction of the service life for all converters 4 of the respective converter system 3.

Additionally or alternatively, the subset comprises all converters 4 of the plurality of converters 4 if the electrolyzer operating power, particularly in the end-of-life state EOL of the electrolyzer 2, between the electrolyzer power limit 7 and the maximum converter system power capacity. Thus, the subset comprises all converters 4 of the converter system 3 if the electroylzer operating power is within area B in the current-voltage diagram on the right side of Figure 1.

Additionally or alternatively, the converter power capacity of the respective converter 4 of the respective converter system 3 corresponds to an operating power difference between the electrolyzer operating power in the end-of-life state EOL of the electrolyzer 2 and the electrolyzer operating power in the begin-of-life state BOL of the electrolyzer 2. Thus, the converter power capacity is dimensioned in accordance with a delta of the electrolyzer operating power between the end-of-life state EOL and the begin-of-life state BOL of the electrolyzer 2. This corresponds to an optimum ratio of service life and installation costs of the converter system 3.

This allows the implementation of an alternating or rotating operation scheme of the converter system 3 and an even distribution of operating hours across all converters 4 of the converter system 3. This minimizes wear and increases the service life of the converter system 3. Thus, the overall service life of the converter system 3 can be improved.

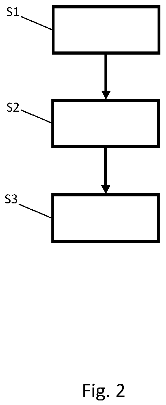

Figure 2 shows a schematic flow chart of a method for operating an electrolysis system 1, particularly for implementing said alternating operation scheme.

In a first step S1, the converter system 3 is operated by means of a subset of the plurality of converters 4 if the electrolyzer operating power is less than the maximum converter system power capacity and/or the electrolyzer operating power limit 7, where all converters 4 must be operated.

Additionally or alternatively, the subset comprises all converters 4 of the plurality of converters 4 if the electrolyzer operating power, particularly in an end-of-life state EOL of the electrolyzer 2, is between the electrolyzer operating power limit 7 and the maximum converter system power capacity.

Additionally, the converter power capacity of the respective converter 4 corresponds to an operating power difference between the electrolyzer operating power in the end-of-life state EOL of the electrolyzer 2 and the electrolyzer operating power in a begin-of-life state BOL of the electrolyzer 2.

In a second step S2, a number of converters 4 of the subset is adjusted corresponding to the electrolyzer operating power and/or an aging parameter of the electrolyzer 2.

In a third step S3, a selection of the converters 4 from the plurality of converters 4 for the subset is changed.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolysis system (1) comprising an electrolyzer (2) and a converter system (3) which comprises a plurality of converters (4) and is adapted to convert an alternating current electrical power input (5) into a direct current electrical power input (6) for the electrolyzer (2), wherein the electrolyzer (2) is adapted to produce an energy carrier by means of the direct current electrical power input (6) from the converter system (3) at an electrolyzer operating power which is less than or equal to a maximum converter system power capacity of the converter system (3), wherein the respective converter (4) of the converter system (3) has a converter power capacity which partially corresponds to the maximum power capacity of the converter system (3),
**characterized in that**
the converter system (3) is adapted to operate by means of a subset of the plurality of converters (4) if the electrolyzer operating power is less than the maximum converter system power capacity.

2. Electrolysis system (1) according to claim 1, **characterized in that** the converter system (3) is adapted to adjust a number of converters (4) of the subset corresponding to the electrolyzer operating power and/or an aging parameter of the electrolyzer (2).

3. Electrolysis system (1) according to one of the preceding claims, **characterized in that** the converter system (3) is adapted to change a selection of the converters (4) from the plurality of converters (4) for the subset.

4. Electrolysis system (1) according to one of the preceding claims, **characterized in that** the subset comprises all converters (4) of the plurality of converters (4) if the electrolyzer operating power, particularly in an end-of-life state (EOL) of the electrolyzer (2), is between an electrolyzer operating power limit (7) where all converters (4) of the converter system (3) must be operated and the maximum converter system power capacity.

5. Electrolysis system (1) according to one of the preceding claims, **characterized in that** the converter power capacity of the respective converter (4) corresponds to an operating power difference between the electrolyzer operating power in the end-of-life state (EOL) of the electrolyzer (2) and the electrolyzer operating power in a begin-of-life state (BOL) of the electrolyzer (2).

6. Method for operating an electrolysis system (1) comprising an electrolyzer (2) and a converter system (3) which comprises a plurality of converters (4) and which converts an alternating current electrical power input (5) into a direct current electrical power input (6) for the electrolyzer (2), wherein the electrolyzer (2) produces an energy carrier by means of the direct current electrical power input (6) from the converter system (3) at an electrolyzer operating power which is less than or equal to a maximum converter system power capacity of the converter system (3), wherein the respective converter (4) of the converter system (3) has a converter power capacity which partially corresponds to the maximum power capacity of the converter system (3), comprising the step of:
- Operating the converter system (3) by means of a subset of the plurality of converters (4) if the electrolyzer operating power is less than the maximum converter system power capacity.

7. Method according to claim 6, further comprising the step of:
- Adjusting a number of converters (4) of the subset corresponding to the electrolyzer operating power and/or an aging parameter of the electrolyzer (2).

8. Method according to claim 6 or 7, further comprising the step of:
- Changing a selection of the converters (4) from the plurality of converters (4) for the subset.

9. Method according to one of the claims 6 to 8, **characterized in that** the subset comprises all converters (4) of the plurality of converters (4) if the electrolyzer operating power, particularly in an end-of-life state (EOL) of the electrolyzer (2), is between an electrolyzer operating power limit (7) where all converters (4) of the converter system (3) must be operated and the maximum converter system power capacity.

10. Method according to one of the claims 6 to 9, **characterized in that** the converter power capacity of the respective converter (4) corresponds to an operating power difference between the electrolyzer operating power in the end-of-life state (EOL) of the electrolyzer (2) and the electrolyzer operating power in a begin-of-life state (BOL) of the electrolyzer (2).

11. Computer program comprising instructions which, when the program is executed by a computer and/or a controller, particularly a converter controller and/or an electrolyzer power supply system controller and/or an electrolyzer controller, cause the computer and/or the controller to carry out the method of one of the claims 6 to 10.

12. Computer-readable storage medium having stored thereon the computer program of claim 11.

13. Computer and/or a controller, particularly a converter controller and/or an electrolyzer power supply system controller and/or an electrolyzer controller, comprising the computer readable storage medium of claim 12 and optionally means to carry out the method of one of the claims 6 to 10.

14. Converter system (3) comprising the controller of claim 13.

15. Electrolyzer power supply system (10) comprising the controller of claim 13 and/or the converter system (3) of claim 14.
